## Europäisches Patentamt

## European Patent Office

## Office européen des brevets

(11) Publication number : **0 623 659 A2**

## (12) EUROPEAN PATENT APPLICATION

(21) Application number : **94302968.6**

(22) Date of filing : **25.04.94**

(51) Int. Cl.$^5$ : **C09D 151/00**, C09J 151/00, C08F 265/06

(30) Priority : **07.05.93 US 60175**

(43) Date of publication of application :
**09.11.94 Bulletin 94/45**

(84) Designated Contracting States :
**AT BE CH DE DK ES FR GB GR IE IT LI LU NL PT SE**

(71) Applicant : **ROHM AND HAAS COMPANY**
**100 Independence Mall West**
**Philadelphia, Pennsylvania 19106-2399 (US)**

(72) Inventor : **Demarest, Victoria Anne**
**7041 East Valley Green Road**
**Flourtown, PA 19031 (US)**
Inventor : **Winey, Donald Alfred**
**350 Rettop Place**
**Warminster, PA 18974 (US)**
Inventor : **De Grandpre, Mark Peter**
**718 Comly Circle**
**North Wales, PA 19454 (US)**
Inventor : **Ziemann, Otto Carl**
**1260 Turnbury Lane**
**North Wales, PA 19454 (US)**

(74) Representative : **Angell, David Whilton et al**
**ROHM AND HAAS (UK) LTD.**
**European Operations Patent Department**
**Lennig House**
**2 Mason's Avenue**
**Croydon, Surrey, CR9 3NB (GB)**

(54) **Use of a multi-staged latex and a process for making the multi-staged latex.**

(57)   This invention is directed to use of a multi-staged latex in a coating to improve the water whitening resistance of the coating. The multi-staged latex preferably comprises from about 50 to about 95 percent by weight of at least one first polymer stage having a Tg from about 0°C to about -30°C and from about 5 to about 50 percent by weight of at least one second polymer stage having a Tg from about 0°C to about 80°C. The multi-staged latex is preferably in the form of aqueous coating compositions, such as for example, sealers, renderings, caulks, sealants, adhesives and floor polishes. A process for making the multi-staged latex is also disclosed.

EP 0 623 659 A2

This invention relates to use of a multi-staged latex. This invention also relates to a process for making the multi-staged latex. In general, the multi-staged latex acts as a binder.

Exterior aqueous coatings, such as for example, "sealers" and "renderings", are subjected to a wide variety of extreme weather conditions, such as rain, sleet, and snow. "Sealer" as used hereinafter, refers to a clear, unfilled polymeric coating, which is applied to a substrate, such as for example, wood, concrete and plaster, to protect the surface of the substrate and enhance its appearance. "Rendering", as used hereinafter, refers to a non-pigmented coating, consisting primarily of latex binder and decorative filler. Under these weather conditions, sealers and renderings are in contact with water for extended periods of time. Since these coatings are water-based they tend to "whiten", often considerably, on contact with water. This whitening is aesthetically undesirable.

"Water whitening resistance" as used hereinafter, refers to the resistance of a coating to whitening during contact with water. Water whitening is a particular concern for coatings which are unpigmented, such as sealers and renderings, because the whitening is noticeable and visually unappealing. Water whitening is an additional concern for sealers and renderings applied over dark colored substrates and in renderings made with dark colored fillers.

The aim of the present invention is to improve water whitening resistance of coatings.

In accordance with the present invention, there is provided use of a multi-staged latex in a coating to improve the water whitening resistance of the coating.

In a second aspect of the invention, there is provided a process for producing the multi-staged latex by polymerizing in at least one first stage at least one ethylenically unsaturated monomer, followed by polymerizing in at least one second stage at least one ethylenically unsaturated monomer, both stages being polymerized at a pH of less than 6.0.

When the multi-staged latex is used in coatings it provides good water whitening resistance. It also provides a good balance of water whitening resistance, film formation characteristics, and properties suitable for applications requiring flexibility.

Use of a multi-staged latex in a coating has unexpectedly been found to be superior to the use of either a single staged latex of the same overall composition or a blend of separately prepared single staged latexes in a coating. By "single staged latex", we mean a latex which had one monomer composition throughout the polymerization.

The multi-staged latex is preferably used as a binder in aqueous coating compositions. In a preferred embodiment of this invention, the aqueous coating compositions include sealers and renderings.

The multi-staged latex is comprised of latex particles which each contain at least two distinct polymer stages. By "distinct polymer stages" in the latex particles, we mean that the monomer compositions of each stage are different, therefore polymer properties of each stage, such as for example, Tg, can be varied. The multi-staged latex is made by a multi-staged process. By "multi-staged process", we mean the sequential polymerization of two or more distinct monomer mixtures. The emulsion polymerization techniques used to prepare the multi-staged latex are well known in the art.

Since compatibility in high molecular weight polymers of different compositions is unusual, most multi-staged latexes contain particles made up of at least two distinct polymer stages. The particles may have a number of morphological configurations, such as for example: core/shell wherein the core is the first polymer stage and the shell is the second polymer stage, inverse core/shell wherein the core is the second polymer stage and the shell is the first polymer stage, core/shell structures wherein the shell incompletely encapsulates the core (sometimes referred to as "lobed" or "strawberry") and heterogeneous structures wherein one polymer stage forms a number of discrete domains within the other polymer stage, interpenetrating network particles. The morphological configurations may be determined in various ways known in the art. The use of scanning transmission electron microscopy using staining techniques, when appropriate, to emphasize the difference between the appearance of the stages is such a technique. Electron micrographs of some of the multi-staged latexes of this invention reveal that the second polymer stage forms discrete domains within the first polymer stage.

It is preferred that the Tg of at least one first polymer stage is lower than the Tg of at least one second polymer stage. The Tg, glass transition temperature, of each polymer stage can be approximated by the Fox equation, $1/T_{g[polymer,\ P(A/B/N)]} = W_A/T_{g[monomer\ A]} + W_B/T_{g[monomer\ B]} + W_N/T_{g[monomer\ N]}$, etc. where $W_N$=weight fraction of monomer N). The Tg of the first polymer stage is preferably from about 0°C to about -30°C and the Tg of the second polymer stage is preferably from about 0°C to about 80°C. It is preferred that the Tg of the second polymer stage is from about 30°C to about 60°C and more preferable that the Tg of the second polymer stage is from about 45°C to about 60°C. The multi-staged latex preferably comprises from about 50 to about 95 percent by weight of the first polymer stage and from about 5 to about 50 percent by weight of the second polymer stage. It is preferred that the multi-staged latex comprises from about 75 to about 90 percent by weight of the first polymer stage and from about 25 to about 10 percent by weight of the second polymer stage. It is more preferable that the multi-staged latex comprises from about 75 to about 80 percent by weight of the first polymer stage and from about 25 to about 20 percent by weight of the second polymer stage.

The multi-staged latex is prepared by the addition polymerization of at least one ethylenically-unsaturated monomer in each stage of a multi-stage process. For example, acrylic ester monomers including methyl acrylate, ethyl acrylate, butyl acrylate, 2-ethylhexyl acrylate, decyl acrylate, methyl methacrylate, butyl methacrylate, i-butyl methacrylate, i-bornyl methacrylate, hydroxyethyl acrylate, hydroxyethyl methacrylate, hydroxypropyl methacrylate, N,N-dimethylaminoethyl methacrylate, and t-butylaminoethyl methacrylate; acrylamide or substituted acrylamides; methacrylamide or substituted methacrylamides; styrene or substituted styrenes, butadiene; vinyl acetate or other vinyl esters; vinyl ethers; and acrylonitrile or methacrylonitrile, may be used. Low levels of ethylenically-unsaturated carboxylic acids such as, for example, methacrylic acid, acrylic acid, itaconic acid, maleic acid and fumaric acid, at the level of 0 - 5%, by weight based on the weight of the polymeric binder, may be used.

The multi-staged latex may include crosslinking monomers, such as for example, allyl methacrylate, divinyl benzene, diallyl maleate, multi-functional acrylates and methacrylates including butylene glycol diacrylate, diethylene glycol dimethacrylate and trimethylol propane trimethacrylate. Both the first stage and the second stage of the multi-staged latex may be crosslinked. However, the amount of crosslinking monomer that can be incorporated in each stage of the multi-staged latex is limited by the need for adequate film formation.

The monomers in each stage of the multi-staged latex may be emulsified with an anionic, cationic or non-ionic surfactant or dispersing agent, or compatible mixtures thereof such as a mixture of an anionic and a non-ionic surfactant, using, for example, from about 0.05% to about 5% by weight of a surfactant or dispersing agent based on the weight of the monomer. Suitable cationic dispersion agents include lauryl pyridinium chloride, cetyldimethyl amine acetate, and alkyldimethylbenzylammonium chloride, in which the alkyl group has from 8 to 18 carbon atoms. Suitable anionic dispersing agents include, for example, alkali fatty alcohol sulfates, such as sodium lauryl sulfate; arylalkyl sulfonates, such as potassium isopropylbenzene sulfonate; alkali alkyl sulfosuccinates, such as sodium octyl sulfosuccinate; and alkali arylalkylpolyethoxyethanol sulfates or sulfonates, such as sodium t-octylphenoxypolyethoxyethyl sulfate, having 1 to 5 oxyethylene units. Suitable non-ionic dispersing agents include, for example, alkyl phenoxypolyethoxy ethanols having alkyl groups from about 7 to 18 carbon atoms and from about 6 to about 60 oxyethylene units such as, for example, heptyl phenoxypolyethoxyethanols; ethylene oxide derivatives of long chained carboxylic acids such as lauric acid, myristic acid, palmitic acid and oleic acid, or mixtures of acids such as those found in tall oil containing from 6 to 60 oxyethylene units; ethylene oxide condensates of long chained alcohols such as octyl, decyl lauryl or cetyl alcohols containing from 6 to 60 oxyethylene units; ethylene oxide condensates of long chain or branched chain amines such as dodecyl amine, hexadecyl amine, and octadecyl amine, containing from 6 to 60 oxyethylene units; and block copolymers of ethylene oxide sections combined with one or more hydrophobic propylene oxide sections. High molecular weight polymers such as hydroxyethyl cellulose, methyl cellulose, polyacrylic acid and polyvinyl alcohol, may be used as emulsion stabilizers and protective colloids.

While a wide range of emulsifiers are known to work in emulsion polymerization, it is also known that water whitening resistance responds to the type and level of these materials. For example, those emulsifiers which contain large blocks of poly(ethylene oxide), such as, for example, greater than about 10 ethylene oxide units, are particularly detrimental for water whitening resistance, whether they are nonionic, anionic or cationic in nature. Such emulsifiers include TRITON ® X-405 surfactant (TRITON is a registered trademark of Union Carbide), AEROSOL® A 103 surfactant (AEROSOL is a registered trademark of American Cyanamid) and ALIPAL® EP-120 surfactant (ALIPAL is a registered trademark of GAF Chemicals Corp.). Those emulsifiers which contain small blocks of poly(ethylene oxide) such as, for example, less than about 10 ethylene oxide units or no poly(ethylene oxide) are preferred for obtaining improved water whitening resistance. Such emulsifiers include SIPONATE ® DS-4 (SIPONATE is a registered trademark of Alcolac, Ltd.), ALIPAL® CO 436 (ALIPAL is a registered trademark of GAF Chemical Corp.), AEROSOL® OT (AEROSOL is a registered trademark of American Cyanamide) and sodium lauryl sulfate. It is known in the art that emulsifiers must be carefully chosen and their use levels minimized, because they can reduce the water whitening resistance of aqueous coatings.

Initiation of the emulsion polymerization may be carried out by the thermal decomposition of free radical precursors which are capable of generating radicals suitable for initiating addition polymerization such as, for example, ammonium or potassium persulfate. Or such free radical precursors may be used as the oxidizing component of a redox system, which also includes a reducing component such as potassium metabisulfite, sodium thiosulfate, or sodium formaldehyde sulfoxylate. The free radical precursor and the reducing agent together, referred to as the redox system hereinafter, may be used at a level from about 0.01% to about 5%, based on the weight of the monomers used. Examples of redox systems include t-butyl hydroperoxide/sodium formaldehyde sulfoxylate/Fe(II) and ammonium persulfate/sodium bisulfite/sodium hydrosulfite/Fe(II). The polymerization temperature may be from about 20°C to about 95°C.

Each stage of the multi-staged polymerization process may incorporate thermal or redox initiation of polymerization. A monomer emulsion containing all or some portion of the monomers to be polymerized in a given stage may be prepared using the monomers, water and emulsifiers. A solution of initiator in water may be separately prepared. The monomer emulsion and initiator solution may be cofed into the polymerization vessel over the course of the emulsion polymerization of any stage of the process. The reaction vessel itself may also initially contain seed emulsion and further may additionally contain an initial charge of the polymerization initiator. The temperature of the contents of the reaction vessel may be controlled by cooling to remove heat generated by the polymerization reaction or by heating the reaction vessel. After addition of the first stage monomer emulsion has been completed, the polymerization reaction mixture may be held at some temperature for a time and treated with an additional polymerization initiator prior to polymerization of the second, or subsequent, stages. Similarly, after addition of the final stage monomer emulsion has been completed, the polymerization reaction mixture may be held at some temperature for a time and/or treated with an additional polymerization initiator before cooling to ambient temperature. A multi-staged process which is a two staged process is preferred. A two stage process in which the second stage is prepared by a redox initiated process is preferred. A two stage process in which the second stage is prepared by a one-shot initiated redox process is more preferred. By "one-shot" redox, we mean a one time addition of monomer to the reaction vessel.

Chain transfer agents including mercaptans, polymercaptans, alcohols, and halogen compounds are sometimes used in the polymerization mixture in order to moderate the molecular weight of the polymeric binder. Chain transfer agents may be used, in moderation, in either stage of the two stage polymerization. Generally, from 0% to about 3% by weight, based on the weight of the polymeric binder, of $C_4$-$C_{20}$ alkyl mercaptans, mercaptoproprionic acid, or esters of mercaptoproprionic acid, may be used. The weight average molecular weight of the polymer stages, as measured by gel permeation chromatography, is from about 100,000 to 10,000,000.

As is well known in the art, control of latex particle size is accomplished by a variety of techniques, any of which may be applied to the multi-staged latex. For the multi-staged latex, it is preferred that the latex particles are formed by introducing and polymerizing a portion of the first stage monomer emulsion. Such polymerizations tend to form smaller final particle size emulsions, such as for example, less than about 150 nm.

It is preferred that the particle size of the multi-staged latex, as measured using a Brookhaven BI-90 Particle Sizer which employes a light scattering technique, is less than about 250 nanometers (nm). It is more preferred that the multi-staged latex has a particle size less than about 150 nm and most preferred that the multi-staged latex has a particle size of about 100 nm to obtain improved water whitening resistance The lower particle size range for the multi-staged latexes is limited only by the requirements for synthesizing small particle size latexes, such as for example, surfactant levels, which can adversely effect water whitening resistance.

The pH during the emulsion polymerization process has an effect on the water whitening resistance of the multi-staged latex. By preferably carrying out the entire, two-staged emulsion polymerization with no or a controlled low level of neutralization so that the in-process pH is less than about 6.0, multi-staged latexes with excellent water whitening resistance can be obtained. Conversely, carrying out the emulsion polymerization process at an in-process pH higher than about 6.0, either by buffering the kettle charge prior to the start of polymerization or by neutralization of the first polymer stage to a pH of about 7.0, results in degradation of water whitening resistance. The pH during the second stage polymerization is critical to the water whitening resistance of the multi-staged latex. It is possible to polymerize the first stage at a high pH, such as for example, greater than about 7.0, followed by lowering the pH to less than about 6.0 for the second stage polymerization. The preferred method is to run the entire two-staged polymerization at a pH of less than about 6.0.

Adjuvants useful in the preparation of the multi-staged latex and/or in its subsequent use and which may be added during or subsequent to the polymerization reaction may include auxiliary surfactants; defoamers used at a level from about 0.001 to about 0.1% by weight based on the weight of the latex solids; levelling agents used at a level from about 0.001 to about 0.1% by weight based on the weight of the latex solids; antioxidants used at a level from about 0.1 to about 5% by weight based on the weight of the latex solids; coalescents such as, for example, BUTYL CARBITOL® solvent or BUTYL CELLOSOLVE® solvent (both registered trademarks of Union Carbide) at a level of 0-20% by weight based on the weight of the latex solids; and preservatives used at a level of 5-250 ppm based on latex weight.

The multi-staged latex can be used to formulate a variety of aqueous coatings where water whitening resistance is desired. It is preferred that the aqueous coatings include sealers and renderings. The multi-staged latex may be also be used in a wide variety of applications, such as, for example, caulks and sealants, adhesives and floor polishes.

The aqueous coatings can be applied to a wide variety of substrates, such as for example, wood, fiber, press board, metal, glass, ceramics, plaster, stucco, asphalt, gypsum board, plastics and concrete. In particular, the sealers and renderings of this invention may be applied to a wide variety of architectectural construction materials such as, for example, cementitious and non-cementitious EIFS basecoats; EIFS topcoats; wood; fiber board; press board; concrete; terazzo; stone, such as for example, marble, slate, and granite; masonry; plaster; stucco; floor tiles, such as for example, solid vinyl, vinyl composition, quarry tiles, and pavers; roofing tiles and decking substrates. By "EIFS" , we mean Exterior Insulation and Finish Systems, a multi-component exterior cladding assembly which consists of substrate, adhesive, insulation, basecoat, topcoat and sealer.

The aqueous coatings formulated with the multi-staged latex include from about 3 to about 100 percent by weight of the multi-staged latex. More particularly, sealers may be formulated with up to 100 percent by weight of the multi-staged latex and renderings may be formulated with about 3 to about 40 percent by weight of the multi-staged latex. Additional ingredients in the aqueous coating formulation may also include coalescents, plasticizers, wetting agents, flow aids, defoamers, surfactants, waxes, thickeners, rheology modifiers, biocides, pigments, extenders, decorative fillers, colorants and dispersants. It is well known in the art that these additional ingredients must be carefully chosen since they can effect the water whitening resistance of the aqueous coatings by increasing the water sensitivity of the aqueous coatings.

In a preferred embodiment of this invention, the aqueous coatings includes sealers and renderings. The sealers and renderings of this invention may be mixed using a variety of techniques known in the art such as, for example, high speed dispersators, static mixers, ribbon blenders and low speed mixers.

The sealers and renderings of this invention may be applied by a variety of techniques known in the art such as, for example, air assisted or airless spray, electrostatic spray, brush, roller and trowel.

The following examples are only intended to illustrate the invention. They are not intended to limit the invention.

*Test Procedures*

The water whitening characteristics of the following polymers were determined by drawing neat latex films onto black vinyl Leneta paper using a #40 wire wound rod. The films were cured at 75°F/55% relative humidity for 24 hours and then submerged into a room temperature bath of distilled water. Film whiteness was measured up to 48 hours using a Pacific Scientific 45°/0° Reflectometer. The greater the unitless reflectometer number, the greater the whiteness of the submerged film and the poorer the water whitening resistance of the latex.

Example 1: Preparation of a Multi-Staged Latex with a Redox Seed Process

In the following example, the first stage monomer emulsion (hereinafter referred to as "ME-I") was prepared by mixing together 366.8g deionized (DI) water, 7.5g SIPONATE® DS-4, 913.1g butyl acrylate, 501.1g methyl methacrylate and 21.5g methacrylic acid. The second monomer emulsion (hereinafter referred to as "ME-II") was prepared by mixing 113g DI water, 2.5g SIPONATE® DS-4, 91.4g butyl acrylate, 380.0g methyl methacrylate, and 7.2g methacrylic acid.

1264.2g deionized (DI) water were charged into a 5 liter, four necked, round bottomed flask (hereinafter referred to as the "kettle") equipped with a stirrer, thermometer, heater, and reflux condenser. The water in the kettle was heated to 52°C in a nitrogen atmosphere, heating was terminated, and 3.2g SIPONATE® DS-4 and 656.4g of the ME-I monomer emulsion with 15.9g DI rinse water were added. The kettle temperature dropped to 45°C. The following were then added in order: 6.2g of a 0.15% $FeSO_4 \cdot 7H_2O$ aqueous solution, 0.83g ammonium persulfate in 39.4g DI water, and 0.57g LYKOPON® reducing agent in 73.0g DI water. An exotherm began in less than 5 minutes and after approximately 15 minutes, the polymerization temperature peaked at 84°C. The kettle contents were stabilized with 34.1g SIPONATE® DS-4 and a 10.9g DI water rinse. An additional 15.1g SIPONATE® DS-4 were then added to the remaining, unused ME-I. While cooling the kettle to maintain the temperature at less than or equal to about 83°C, the remaining ME-I and a cofeed of 1.72g ammonium persulfate in 95.8g DI water were fed into the kettle over 120 minutes. When the feeds were complete, the ME-I container was rinsed into the kettle with 28.7g DI water. The mixture in the kettle was allowed to cool slowly to 75°C and 1.6g 29% aqueous ammonia in 4.8g DI water were added. While the mixture was allowed to further cool to 70°C, the following were added in order: 1.6g of 1% $FeSO_4 \cdot 7H_2O$ aqueous solution, 2.8g 70% active t-butyl hydroperoxide in 7.9g DI water, and 1.44g sodium formaldehyde sulfonate in 31.9g DI water. The mixture was held at about 70°C for 15 minutes and then an additional 2.8g 70% active t-butyl hydroperoxide in 7.9g DI water and 1.44g sodium formaldehyde sulfoxylate in 31.9g DI were added. After holding the mixture at 70°C for an additional 15 minutes, 0.16g diethylhydroxylamine in 4.8g DI water were added. The completed first stage was then allowed to cool to 60°C and the ME-II monomer emulsion, with a 9.1g DI water rinse, was added to the kettle. After stirring for 5 minutes, the following were added in order: 0.61g 70% active t-butyl hydroperoxide in 3.1g DI water and 0.41g sodiumformaldehyde sulfoxylate in 7.5g DI water. Within ten minutes, the resulting polymerization exotherm increased the temperature in the kettle to 74°C. Five minutes after the temperature peak, 0.61g 70% active t-butyl hydroperoxide in 3.1g DI water, followed by 0.41g sodiumformaldehyde sulfoxylate in 7.5g DI water were added. The mixture was allowed to cool to 65°C over 15 minutes and then an additional 0.61g 70% active t-butyl hydroperoxide in 3.1g DI water, followed by 0.41g sodium formaldehyde sulfoxylate in 7.5g DI water were added. Thirty minutes later the final neutralizer of 11.0g 29% aqueous ammonia in 22.0g DI water was added. The final composition of Example 1 is 75% of a 63.6BA/34.9MMA/1.5MAA first polymer stage and 25% of a 19.1BA/79.4MMA/1.5MAA second polymer stage. The calculated Tg of the first polymer stage was -14°C and the calculated Tg of the second polymer stage was 60°C. The resulting latex characteristics are listed in Table 1.

Comparative A: A Single Staged Latex of the Same Overall Composition as Example 1

Proceeding as in Example 1, ME-II was combined with ME-I so that a latex with a single staged composition of 52.47BA/46.03MMA/1.5MAA was obtained. Comparative A had the same overall composition and average Tg as Example 1 and was a single staged latex. The polymerization was carried out as in Example 1 with a longer ME feed time (180 min), and elimination of the second stage initiators. The resulting latex characteristics are listed in Table 1.

Comparative B: A 75%/25% Blend of The First and Second Polymer Stages of Example 1

*Preparation of the First Polymer Stage of Example 1*

A latex having the same composition as the first polymer stage of Example 1, 63.6BA/34.9MMA/1.5MAA, was prepared by terminating the Example 1 polymerization reaction at the end of the first stage. The resulting latex had a pH of 2.6, a particle size of 119nm, a viscosity of 170 cps and was 41.6 weight percent solids.

*Preparation of the Second Polymer Stage of Example 1*

A latex having the same composition of the second polymer stage of Example 1, 19.1BA/79.4MMA/1.5MAA, was prepared using the same process as the first stage. The resulting latex had a pH of 3.4, a particle size of 111nm, a viscosity of 10 cps and was 40.3 weight percent solids.

The separately prepared first and second polymer stages of Example 1 were blended in the same proportions as the two stages of Example 1. This was done by mixing 30.95g of the first polymer stage latex of Example 1 with 10.32g of the second polymer stage latex of Example 1. The resulting 100g of latex contained latex solids which were 75%, by weight, of the first stage of Example 1 and 25%, by weight, of the second stage of Example 1. This latex, Comparative B, was neutralized to a pH of 8.9 with 29% aqueous ammonia, and compared to Example 1 for water whitening in Table 2.

Comparative C: Commercial Latex

The water whitening of a single-staged commercial latex which is used in sealer and rendering formulations was included for comparison. Comparative C has a higher Tg than the average Tg of Example 1. The latex characteristics are listed in Table 1.

Comparative D: Commercial Latex

A multi-staged commercial latex, not designed for improved water whitening resistance, was also included for comparison. Comparative D has a lower average Tg and a higher particle size than the multi-staged latex of this invention. The latex characteristics are listed in Table 1.

Table 1. Latex Characteristics of Example 1 and Comparatives A-D

| Latex | | pH | Particle Size (nm) | Viscosity (cps)[a] | Weight % Solids |
|---|---|---|---|---|---|
| Example 1 | Multi-staged Latex | 8.9 | 130 | 82 | 46.4 |
| Comparative A | Single Staged Latex with Same Overall Composition as Example 1 | 8.9 | 125 | 30 | 46.1 |
| Comparative B | 75%/25% Blend of the First & Second Polymer Stages of Example 1 | 8.9 | 75%(119) 25%(111) | 130 | 41.3 |
| Comparative C | Commercial Latex | 9.5 | 123-135 | 177 | 50.0 |
| Comparative D | Commercial Latex | 9.0 | 340 | 184 | 55.0 |

[a]Brookfield Viscometer, 25°C, #3 spindle @ 60rpm

A comparison of the water whitening of Example 1 (the multi-staged latex), Comparative A, Comparative B (75%/25% blend of the first and second polymer stages of Example 1), and Comparatives C and D (both commercial latexes) is shown in Table 2. This example showed that the water whitening resistance of the multi-staged latex of this invention was better than that of the single staged latex with the same overall composition, better than the blend of the first and second polymer stages of the multi-staged latex, and better than the comparative commercial latexes.

7

## Table 2. Water Whitening of Example 1 and Comparatives

| Latex | | 48hr Water Whitening[a] (Reflectometer Number) |
|---|---|---|
| Example 1 | Multi-Staged Latex | 2.7 |
| Comparative A | Single Staged Latex with Same Overall Composition as Example 1 | 7.0 |
| Comparative B | 75%/25% Blend of First & Second Polymer Stages of Example 1 | 19.9 |
| Comparative C | Commercial Latex | 3.8 |
| Comparative D | Commercial Latex | 19.3 |

[a]The higher the number, the greater the film whiteness and the poorer the water whitening resistance.

Examples 2 thru 13: The Effect of Stage Ratio and Stage Tg on Water Whitening

Proceeding as in Example 1 the first and second stage charges were varied as shown below to provide compositions with different first polymer stage/second polymer stage weight ratios of 75/25, 80/20, 85/15. Additionally the calculated Tg's of the stages were varied; -30°C and -14°C for the first polymer stage and +30°C and +60°C for the second polymer stage. In the following tables, all numbers are in grams and a list of abbreviations is shown below.

Abbreviations: APS=ammonium persulfate, BA=n-butyl acrylate, DS-4= SIPONATE® DS-4, MAA=methacrylic acid, MMA=methyl methacrylate, ME=monomer emulsion, Aq.=aqueous, SSF=sodium formaldehyde sulfoxylate, t-BHP=tertiary -butyl hydroperoxide (70% active)

8

| Example | | 2 | 3 | 4 | 5 |
|---|---|---|---|---|---|
| FIRST STAGE CHARGES: | | | | | |
| ME-I: | DI-Water | 366.8 | 391.2 | 415.7 | 366.8 |
| | DS-4 | 7.5 | 8.0 | 8.5 | 7.5 |
| | BA | 1109.8 | 1183.8 | 1257.8 | 1109.8 |
| | MMA | 304.4 | 324.7 | 345.0 | 304.4 |
| | MAA | 21.5 | 23.0 | 24.4 | 21.5 |
| | Rinse | 28.7 | 30.6 | 32.5 | 28.7 |
| Initiators: | Cofeed | | | | |
| | APS/DI $H_2O$ | 1.72/95.8 | 1.83/102 | 1.95/109 | 1.72/95.8 |
| | t-BHP/DI $H_2O$ | 2.80/7.9 | 3.00/8.4 | 3.17/9.0 | 2.80/7.9 |
| | SSF/DI $H_2O$ | 1.44/31.9 | 1.54/34.0 | 1.63/36.1 | 1.44/31.9 |
| End of feed additive: | | | | | |
| | 29% Aq $NH_4OH$ | 1.62/4.8 | 1.62/4.8 | 1.84/5.4 | 1.62/4.8 |
| SECOND STAGE CHARGES: | | | | | |
| ME-II: | DI $H_2O$ | 113.0 | 90.4 | 67.8 | 113.0 |
| | DS-4 | 2.5 | 2.0 | 1.5 | 2.5 |
| | BA | 91.4 | 73.1 | 54.8 | 162.7 |
| | MMA | 380.0 | 304.0 | 228.0 | 308.7 |
| | MAA | 7.2 | 5.7 | 4.3 | 7.2 |
| | Rinse DI $H_2O$ | 9.1 | 9.1 | 5.5 | 9.1 |
| Initiators: | | | | | |
| | t-BHP/DI $H_2O$ | 0.61/3.1 | 0.49/2.5 | 0.37/1.9 | 0.61/3.1 |
| | SSF/DI $H_2O$ | 0.41/7.5 | 0.33/6.0 | 0.25/4.5 | 0.41/7.5 |

| Example | | 6 | 7 | 8 | 9 |
|---|---|---|---|---|---|
| FIRST STAGE CHARGES: | | | | | |
| ME-I: | DI-Water | 391.2 | 415.7 | 366.8 | 391.2 |
| | DS-4 | 8.0 | 8.5 | 7.5 | 8.0 |
| | BA | 1183.8 | 1257.8 | 913.1 | 974.0 |
| | MMA | 324.7 | 345.0 | 501.1 | 534.5 |
| | MAA | 23.0 | 24.4 | 21.5 | 23.0 |
| | Rinse | 30.6 | 32.5 | 28.7 | 30.6 |
| Initiators: | APS/DI $H_2O$ | 1.84/102 | 1.95/109 | 1.72/95.8 | 1.84/102 |
| | t-BHP/DI $H_2O$ | 3.00/8.4 | 3.17/9.0 | 2.80/7.9 | 3.00/8.4 |
| | SSF/DI $H_2O$ | 1.54/34.0 | 1.63/36.1 | 1.44/31.9 | 1.54/34.0 |
| End of feed additive: | | | | | |
| | 29% Aq. $NH_4OH$ | 1.73/5.1 | 1.84/5.4 | 1.62/4.8 | 1.73.5.1 |
| SECOND STAGE CHARGES: | | | | | |
| ME-II: | DI $H_2O$ | 90.4 | 67.8 | 113.0 | 90.4 |
| | DS-4 | 2.0 | 1.5 | 2.5 | 2.0 |
| | BA | 130.2 | 97.6 | 91.4 | 73.1 |
| | MMA | 247.0 | 185.2 | 380.0 | 304.0 |
| | MAA | 5.7 | 4.3 | 7.2 | 5.7 |
| | Rinse | 7.3 | 5.5 | 9.1 | 7.3 |
| Initiators: | | | | | |
| | tBHP/DI $H_2O$ | 0.49/2.5 | 0.37/1.9 | 0.61/3.1 | 0.49/2.5 |
| | SSF/DI $H_2O$ | 0.33/6.0 | 0.25/4.5 | 0.41/7.5 | 0.33/6.0 |

| Example | | 10 | 11 | 12 | 13 |
|---|---|---|---|---|---|
| FIRST STAGE CHARGES: | | | | | |
| ME-I: | DI-Water | 415.7 | 366.8 | 391.2 | 415.7 |
| | DS-4 | 8.5 | 7.5 | 8.0 | 8.5 |
| | BA | 1034.9 | 913.1 | 974.0 | 1034.9 |
| | MMA | 567.9 | 501.1 | 534.5 | 567.9 |
| | MAA | 24.4 | 21.5 | 23.0 | 24.4 |
| | Rinse | 32.5 | 28.7 | 30.6 | 32.5 |
| Initiators: | APS/DI $H_2O$ | 1.95/109 | 1.72/95.8 | 1.84/102 | 1.95/109 |
| | t-BHP/DI $H_2O$ | 3.17/9.0 | 2.80/7.9 | 3.00/8.4 | 3.17/9.0 |
| | SSF/DI $H_2O$ | 1.63/36.1 | 1.44/31.9 | 1.54/34.0 | 1.63/36.1 |
| End of feed additive: | | | | | |
| | 29% Aq $NH_4OH$ | 1.84/5.4 | 1.62/4.8 | 1.73/5.1 | 0.84/5.4 |
| SECOND STAGE CHARGES: | | | | | |
| ME-II: | DI $H_2O$ | 67.8 | 113.0 | 90.4 | 67.8 |
| | DS-4 | 1.5 | 2.5 | 2.0 | 1.5 |
| | BA | 54.8 | 162.7 | 130.2 | 97.6 |
| | MMA | 228.0 | 308.7 | 247.0 | 185.2 |
| | MAA | 4.3 | 7.2 | 5.7 | 4.3 |
| | Rinse | 5.5 | 9.1 | 7.3 | 5.5 |
| Initiators: | | | | | |
| | t-BHP/DI $H_2O$ | 0.37/1.9 | 0.61/3.1 | 0.49/2.5 | 0.37/1.9 |
| | SSF/DI $H_2O$ | 0.25/4.5 | 0.41/7.5 | 0.33/6.0 | 0.25/4.5 |

The resulting latex characteristics of Examples 2-13 are listed in Table 3.

Table 3. Latex Characteristics of Examples 2-13

| Latex | Composition[a] (First Polymer Stage /Second Polymer Stage) | Particle Size (nm) | Viscosity (cps)[b] | Weight % Solids |
|---|---|---|---|---|
| Stage Tg, °C | -30/+60 | | | |
| Example 2 | 75%/25% | 104 | 170 | 46.2 |
| Example 3 | 80%/20% | 108 | 106 | 46.1 |
| Example 4 | 85%/15% | 106 | 142 | 45.8 |
| Stage Tg, °C | -30/+30 | | | |
| Example 5 | 75%/25% | 103 | 230 | 46.1 |
| Example 6 | 80%/20% | 110 | 138 | 46.0 |
| Example 7 | 85%/15% | 108 | 78 | 45.4 |
| Stage Tg, °C | -14/+60 | | | |
| Example 8 | 75%/25% | 108 | 64 | 46.1 |
| Example 9 | 80%/20% | 105 | 94 | 46.0 |
| Example 10 | 85%/15% | 97 | 170 | 45.8 |
| Stage Tg, °C | -14/+30 | | | |
| Example 11 | 75%/25% | 104 | 135 | 46.2 |
| Example 12 | 80%/20% | 99 | 160 | 46.0 |
| Example 13 | 85%/15% | 99 | 126 | 45.7 |

a. Weight %
b. Brookfield Viscometer, 25°C, 30 spindle @ 60rpm
pH about 8.8 for all latexes

A comparison of the water whitening of Examples 2-13 is shown in Table 4. The water whitening resistances of the multi-staged polymers of this invention are all significantly better than the water whitening resistances of the Comparatives listed in Table 2. They are also dependent on both the Tgs of the first and second polymer stages and on the relative weight ratios of these stages. In general, the higher the amount of the second polymer stage and the higher the Tg of the second polymer stage, the better the water whitening resistance. These examples also showed that the multi-staged latex of this invention provides improvements in water whitening resistance over broad composition and Tg ranges.

## Table 4. Water Whitening of Examples 2-13

| Latex | Composition[a] (First Polymer Stage/Second Polymer Stage) | 48 hr. Water Whitening[b] (Reflectometer Number) |
|---|---|---|
| Stage Tg, °C | -30/+60°C | |
| Example 2 | 75%/25% | 1.5 |
| Example 3 | 80%/20% | 2.4 |
| Example 4 | 85%/15% | 3.0 |
| Stage Tg, °C | -30/+30 | |
| Example 5 | 75%/25% | 2.0 |
| Example 6 | 80%/20% | 2.7 |
| Example 7 | 85%/15% | 4.9 |
| Stage Tg, °C | -14/+60 | |
| Example 8 | 75%/25% | 1.3 |
| Example 9 | 80%/20% | 1.3 |
| Example 10 | 85%/15% | 1.5 |
| Stage Tg, °C | -14/+30° | |
| Example 11 | 75%/25% | 2.0 |
| Example 12 | 80%/20% | 2.0 |
| Example 13 | 85%/15% | 3.1 |

a. Weight %
b. The higher the number, the greater the film whiteness and the poorer the water whitening resistance.

Example 14: Preparation of a Multi-Staged Latex with a Thermal Seed Process

In the following example, the first stage monomer emulsion (referred to hereinafter as "ME-I") was prepared by mixing together 366.8g deionized (DI) water, 7.5g SIPONATE® DS-4, 913.1g butyl acrylate, 501.1g methyl methacrylate and 21.5g methacrylic acid. The second monomer emulsion (referred to hereinafter as "ME-II") was prepared by mixing 113g DI water, 2.5g SIPONATE® DS-4, 91.4g butyl acrylate, 380.0g methyl methacrylate, and 7.2g methacrylic acid.

1264.2g DI water and 35.4g SIPONATE® DS-4, 2.36g sodium carbonate·$H_2O$ were charged into a 5 liter, four necked, round bottomed flask (referred to hereinafter as the "kettle") equipped with a stirrer, thermometer, heater, and reflux condenser. The water in the kettle was heated to 80°C in a nitrogen atmosphere and then 36.1g ME-I and a 5.9g DI water rinse were added while the temperature of the kettle was raised to 83°C. At 83°C, 6.5g ammonium persulfate in 90.4g DI water were added. The resulting polymerization exotherm increased the temperature in the kettle to 85°C within 10 minutes. Five minutes after the peak temperature was reached, feeds of the remaining ME-I and 1.16g ammonium persulfate in 95.8g DI water were started. These were completed in 185 minutes. During this time the kettle temperature was maintained at 83°C, by cooling as necessary. When the feeds were complete, the ME-I container was rinsed into the kettle with 28.7g DI water. The mixture was then allowed to cool to 71°C over a period of 30 minutes. At 71°C, 1.6g 1% aqueous $FeSO_4·7H_2O$, 2.8g 70% active t-butyl hydroperoxide in 7.9g DI water, and 1.44g isoascorbic acid in 31.9g DI water were added, in order, at one minute intervals. Fifteen minutes later, an additional 2.8g 70% active t-butyl hydroperoxide in 7.9g DI water, and 1.44g isoascorbic acid in 31.9g DI water were added. Fifteen minutes later, 0.16g diethylhydroxyl amine in 4.8g DI water were added. The completed first stage was then allowed to cool to 60°C and the ME-II monomer emulsion, with a 9.1g DI water rinse, was added to the kettle. After stirring for 5 minutes, the following were added in order: 0.61g 70% active t-butyl hydroperoxide in 3.1g DI water and 0.41g sodium formaldehyde sulfoxylate in 7.5g DI water. Within ten minutes, the resulting polymerization exotherm increased the temperature in the kettle to 74°C. Five minutes after the temperature peak, 0.61g 70% active t-butyl hydroperoxide in 3.1g DI water, followed by 0.41g sodium formaldehyde sulfoxylate in 7.5g DI water were added. The mixture was allowed to cool to 65°C over 15 minutes and then an additional 0.61g 70%, active t-butyl hydroperoxide in 3.1g DI water, followed by 0.41g sodium formaldehyde sulfoxylate in 7.5g DI water were added. Thirty minutes later the final neutralizer of 15.0g 29% aqueous ammonia in 30.0g DI water was added. The overall composition of Example 14 was similar to that of Example 1, 75% of a 63.6BA/34.9MMA/1.5MAA first polymer stage and 25% of a 19.1BA/79.4MMA/1.5MAA second polymer stage The final latex properties are listed in Table 5.

Examples 15-18: Particle Size Variations in a Thermal Seed Multi-Staged Latex

Proceeding as in Example 14, but with variations in the kettle ME-I charge, in the kettle carbonate charge, and in the distribution of the first stage soap, samples 15-18 were prepared with a range of particle sizes. In the following table, all numbers are in grams.

| Example | 14 | 15 | 16 | 17 | 18 |
|---|---|---|---|---|---|
| Kettle $Na_2CO_3·H_2O$ | 2.4 | 7.8 | 7.8 | 7.8 | 7.8 |
| Kettle ME-I Charge | 36.1 | 72.2 | 120.4 | 120.4 | 245.0 |
| Kettle DS-4 Charge | 35.4 | 35.4 | 35.4 | 29.1 | 3.6 |
| ME-I DS-4 Charge | 3.7 | 3.7 | 3.7 | 10.5 | 35.5 |

Note: DS-4=SIPONATE®DS-4

Examples 19-21: Particle Size Variations in a Redox Seed Multi-Staged Latex

Proceeding as in Example 1, the polymer composition of Example 1 was maintained while the distribution of SIPONATE® DS-4 was varied to change the latex particle size. In the following table, all numbers are in grams.

| Example | 1 | 19 | 20 | 21 |
|---|---|---|---|---|
| SIPONATE® DS-4 Charges: | | | | |
| ME-I #1 | 7.5 | 7.5 | 7.5 | 7.5 |
| ME-I #2 | 15.1 | 15.1 | 6.7 | 2.0 |
| Kettle #1 | 3.2 | 3.4 | 12.0 | 16.7 |
| Kettle #2 | 34.1 | 33.9 | 33.7 | 33.7 |
| ME-II | 2.5 | 2.5 | 2.5 | 2.5 |
| TOTAL CHARGE | 62.4 | 62.4 | 62.4 | 62.4 |

The latex characteristics of the above examples are listed in Table 5.

## Table 5. Latex Characteristics of Examples 14-21

| Latex | Particle Size (nm) | Viscosity (cps)[a] | Weight % Solids |
|---|---|---|---|
| Thermal Process | | | |
| Example 14 | 89 | 266 | 46.8 |
| Example 15 | 102 | 80 | 46.8 |
| Example 16 | 127 | 98 | 46.9 |
| Example 17 | 144 | 32 | 47.0 |
| Example 18 | 258 | 30 | 47.0 |
| Redox Process | | | |
| Example 1 | 130 | 82 | 46.4 |
| Example 19 | 121 | 82 | 46.2 |
| Example 20 | 108 | 76 | 46.1 |
| Example 21 | 102 | 80 | 46.2 |

[a]Brookfield Viscometer, 25°C, 30 spindle @ 60rpm
pH of Thermal about 8.0, pH of Redox about 8.8

The water whitening values of these examples are shown in Table 6. Results indicate that, for both the thermal and redox initiated systems, as the the particle size decreased, the water whitening resistance increased. Particle sizes lower than about 150 nm are preferred for improving water whitening resistance.

## Table 6. Water Whitening of Examples 1 and 14-21

| Latex | Particle Size (nm) | 48 hr. Water Whitening[a] (Reflectometer Number) |
|---|---|---|
| **Thermal** | | |
| Example 14 | 89 | 2.2 |
| Example 15 | 102 | 3.3 |
| Example 16 | 127 | 8.3 |
| Example 17 | 144 | 14.3 |
| Example 18 | 258 | 30.1 |
| **Redox** | | |
| Example 1 | 130 | 2.2 |
| Example 19 | 121 | 1.8 |
| Example 20 | 108 | 1.4 |
| Example 21 | 102 | 0.9 |

[a]The higher the number, the greater the film whiteness and the poorer the water whitening resistance.

### Examples 22-24: The Effect of the pH of the Second Stage Polymerization

Example 22:

To a kettle was charged 1100.6g of the first polymer stage of Example 1. The latex was neutralized with 29% aqueous ammonia to pH about 8 and heated to 60°C. To this latex was added a monomer emulsion of 35.6g DI water, 0.79g SIPONATE® DS-4, 28.8g butyl acrylate, 119.7g methyl methacrylate, and 2.27g methacrylic acid followed by a 2.9g DI water rinse. The pH was at 5.7 and was increased to 7.0 with additional aqueous ammonia. At 55°C the second stage was initiated with 0.19g 70% active t-BHP in 0.98g DI water followed by 0.13g SSF in 2.36g DI water. An exotherm carried the temperature to 75°C in 25 minutes; the pH at this point was 7.2. At the peak temperature a second charge of the two initiator solutions were added. The batch was allowed to cool slowly and the initiator charges were repeated twice at 30 minute intervals. Finally, the latex pH was raised to 8.8 with aqueous ammonia. The resulting latex characteristics are listed in Table 7.

Example 23:

Proceeding as in Example 22 the pH at the initiation step was adjusted to 5.0 with 29% aqueous ammonia. The exotherm carried the temperature from 54 to 74°C in 15 minutes; the pH was then 5.8. The resulting latex characteristics are listed in Table 7.

Example 24:

Proceeding as in Example 22 the pH at the initiation step was adjusted to 3.8 with 29% aqueous ammonia. The exotherm carried the temperature from 54 to 74°C in 7 minutes; the pH at this point was 4.3. The resulting latex characteristics are listed in Table 7.

Table 7. Latex Characteristics of Examples 22-24

| Latex | In-Process pH[a] | Particle Size (nm) | Viscosity (cps)[b] | Weight % Solids |
|---|---|---|---|---|
| Example 22 | 7.2 | 127 | 20 | 42.8 |
| Example 23 | 5.8 | 128 | 30 | 45.9 |
| Example 24 | 4.3 | 125 | 30 | 45.6 |

[a]pH during the second stage polymerization.
[b] Brookfield Viscometer, 25°C, 30 spindle @ 60rpm
pH about 8.7 for all polymers

The water whitening of Example 1 and Examples 22-24 is shown in Table 8. As the pH of the kettle at the time of stage II polymerization decreased, the water whitening resistance increased. By carrying out the polymerization so that the in-process pH is less than about 6, latexes with improved water whitening resistance were obtained.

Table 8. Water Whitening of Examples 1 and 22-24

| Latex | In-Process pH | 48 hr. Water Whitening[a] (Reflectometer Number) |
|---|---|---|
| Example 22 | 7.2 | 16.3 |
| Example 23 | 5.8 | 3.8 |
| Example 24 | 4.3 | 2.0 |
| Example 1 | 2.6 | 2.2 |

[a]The higher the number, the greater the film whiteness and the poorer the water whitening resistance.

Example 25: Formulation of Sealers with the Multi-Staged Latex

Formulated sealers were made by adjusting the latex solids of Example 10 and Comparative C to 42%, with water, and then slowly mixing BUTYL CARBITOL ® solvent into the latexes with agitation. Example 10 was formulated with 5 wt% BUTYL CARBITOL® solvent, based on the weight of the latex solids. Comparative C was formulated with 10 wt% BUTYL CARBITOL® solvent, based on the weight of the latex solids. Comparative C has a higher average Tg than Example 10 and therefore required more BUTYL CARBITOL® solvent than Example 10 to achieve adequate film formation. After 24 hours, 0.14% NOPCO® NXZ defoamer (NOPCO is a registered trademark of Henkel Co.) based on latex weight was added to each emulsion and the mixtures were diluted, with water, by 25%.

The water whitening of sealers applied to EIFS topcoats was determined by coating 3" x 6" panels of a dark colored generic EIFS topcoat with the formulated sealers. Each sealer was applied in two coats, at a total coverage rate of 34 g/ft$^2$. The first coat was allowed to cure for 24 hours before the application of the second coat. The films were cured at 75°F/55% relative humidity for 24 hours and then submerged into a room temperature bath of distilled water. Film whiteness was measured as a function of time using a Pacific Scientific 45°/0° Reflectometer.

The water whitening of the formulated sealers made with Example 10 and Comparative C are shown in Table 9. The water whitening resistance of the sealer made with Example 10, the multi-staged latex of this invention, was considerably better than the water whitening resistance of the sealer made with Comparative C, the single-staged commercial latex.

### Table 9. Water Whitening of Formulated Sealers

| Latex | 48 hr. Water Whitening[a] (Reflectometer Number) |
|---|---|
| Example 10 | 1.6 |
| Comparative C | 9.1 |

[a]The higher the number, the greater the film whiteness and the poorer the water whitening resistance.

### Example 26: Formulation of Renderings with the Multi-Staged Latex

Renderings were made with Example 10 and Comparative C according to the recipes below, which were adjusted so that the two formulations had equal parts, by weight, of polymer and equal final viscosities. All numbers in the following table are in parts by weight.

| Material | Example 10 | Comparative C |
|---|---|---|
| Water | 102.4 | 133.6 |
| Cellulostic Thickener | 0.0 | 2.0 |
| Latex | 371.9 | 340.7 |
| Defoamer | 3.0 | 3.0 |
| BUTYL CARBITOL® Solvent | 8.5 | 17.5 |
| Hexylene Glycol | 10.0 | 10.0 |
| 29% Aqueous Ammonia | 1.0 | 1.0 |
| Polyurethane Thickener | 8.5 | 8.2 |
| Decorative Filler | 2500.0 | 2500.0 |

Films 1/16" thick were drawn onto black vinyl Leneta paper and cured at 75°F/55% relative humidity for 48 hours and then submerged into a room temperature bath of distilled water. Water whitening was measured using a subjective, none-slight-moderate-severe, rating system.

The water whitening of the formulated renderings made with Example 10 and Comparative C are shown in Table 10. The water whitening resistance of the rendering made with Example 10, the multi-staged latex of this invention,was considerably better than the water whitening resistance of the rendering made with Comparative C, the single-staged commercial latex.

**Table 10.**

| Water Whitening of Formulated Renderings | |
|---|---|
| Latex | 48 hr. Water Whitening |
| Example 10 | none |
| Comparative C | moderate |

## Claims

1. Use of a multi-staged latex in a coating to improve water whitening resistance of the coating.

2. Use as claimed in claim 1, wherein the multi-staged latex comprises from 50 to 95 percent, preferably 75 to 90 percent, by weight of at least one first polymer stage having a Tg from 0°C to -30°C and from 5 to 50 percent, preferably 25 to 20 percent, by weight of at least one second polymer stage having a Tg from 0°C to 80°C, preferably from 45°C to 60°C.

3. Use as claimed in claims 1 or 2, wherein the coating is on aqueous composition comprising from 3 to 100 percent by weight of the multi-staged latex defined in claim 2, and the multi-staged latex is preferably acting as a binder.

4. Use as claimed in claims 2 or 3, wherein the latex of the multi-staged latex has a particle size of less than 250nm, preferably less than 150nm, and even more preferably less than 100nm.

5. Use as claimed in claims 2, 3 or 4, wherein the latex is prepared by the addition polymerization of at least one ethylenically unsaturated monomer in each stage of the latex.

6. A process for producing the multi-staged latex defined in claims 2, 3, 4 or 5, the process comprising preparing the multi-staged latex by polymerizing in at least one first stage at least one ethylenically unsaturated monomer, followed by polymerizing in at least one second stage at least one ethylenically unsaturated monomer, both stages preferably being polymerized at a pH of less than 6.0.

7. The process of claim 6, wherein the second stage of the multi-staged latex is prepared by either a redox initiated polymerization or a one-shot redox initiated polymerization.

8. The process of claims 6 or 7, wherein the first stage of the multi-staged latex is started by introducing and polymerizing a portion of the first monomer emulsion.

9. Use as claimed in claim 3, wherein the aqueous composition is a sealer, a rendering, a caulk, a sealant, an adhesive, or a floor polish.

10. A method of coating a substrate, the method comprising contacting the substrate with either the multi-staged latex or the aqueous coating composition defined in claims 2,3,4 or 5.

11. The method of claim 10, wherein the substrate is selected from the group consisting of metal, glass, ceramics, asphalt, gypsum board, plastic, cementitious EIFS basescoats, non-cementitious EIFS basecoats, EIFS topcoats, wood, fiber board, press board, concrete, terazzo, stone, masonry, plaster, stucco, floor tiles, roofing tiles and decking substrates.